# EUROPÄISCHE PATENTANMELDUNG

(11) **EP 1 464 547 A1**
(43) Veröffentlichungstag der Anmeldung: **06.10.2004**
(21) Anmeldenummer: 03405220.9
(22) Anmeldetag: 01.04.2003
(51) Int. Cl.: B60R 19/34, F16F 7/12, B62D 21/15

(54) **Fahrzeug mit Stossstange und Deformationselement**

(71) Anmelder: Alcan Technology & Management Ltd., 8212 Neuhausen am Rheinfall (CH)
(72) Erfinder: Feuerstein, Martin, 78315 Radolfzell (DE); Philipp, Stephan, 78262 Gailingen (DE)

(57) **Zusammenfassung**

Bei einem Fahrzeug ist eine Stossstange über wenigstens ein Deformationselement (28) quer zur Fahrzeuglängsrichtung festgelegt. Das Deformationselement (28) weist ein Trägergehäuse (32) mit einer senkrecht zur Fahrzeuglängsrichtung angeordneten stossstangenseitigen Vorderwand (34), einer in einem Abstand (e) parallel zur Vorderwand (34) angeordneten fahrzeugseitigen Rückwand (38) sowie zwei von einander beabstandeten, die Vorderwand (34) mit der Rückwand (38) verbindenden Gehäusewänden (42,44) auf. Im Trägergehäuse (32) ist wenigstens eine Verbundplatte (46) aus einem beidseitig mit Deckblechen (50,52) beplankten Wabenkern (48) mit senkrecht zu den Deckblechen (50,52) stehenden Zellachsen (w) angeordnet. Die Deckbleche (50,52) liegen der Vorderwand (34) und der Rückwand (38) an und der Wabenkern (48) ist durch eine Stauchung in Zellachsenrichtung vorgeschädigt.

## Beschreibung

Die Erfindung betrifft ein Fahrzeug mit an diesem über wenigstens ein Deformationselement quer zu einer Fahrzeuglängsrichtung festgelegter Stossstange.

Zur Befestigung von Stossstangen an einem Fahrzeug ist eine Vielzahl von Halterungen bekannt. Zur Erhöhung des Kompensationsvermögens für die bei einem Aufprall auf die Stossstange auftreffende Verformungsenergie ist es auch bekannt, Stossstangen über Deformationselemente an den Fahrzeuglängsträgern festzulegen.

Ein bekanntes Deformationselement - auch als Crashbox bezeichnet -- besteht aus einem gestülpten Stahlrohr, das über Befestigungsplatten am Fahrzeuglängsträger und an der Stossstange festgelegt ist. Dieses Deformationselement zeichnet sich durch eine praktisch über den gesamten Verformungsweg gleichbleibende Deformationskraft aus. Diese an sich wünschenswerte Eigenschaft bleibt allerdings nur erhalten, solange die Richtung der Deformationskraft mit der Rohrachse zusammenfällt. Schon bei verhältnismässig kleinen Abweichungen tritt der Stülpvorgang nicht ein und das Rohr wird statt dessen ohne die erwünschte Aufnahme von Verformungsenergie zur Seite gekrümmt. Bei einem Aufprall auf ein weiches Hindernis dringt das Rohr zudem in das Hindernis ein und kann damit nicht sein volles Kompensationsvermögen für die auftreffende Verformungsenergie entfalten. Ein weiterer Nachteil der gestülpten Rohre sind deren hohe Gestehungskosten.

Andere bekannte Deformationselemente enthalten aus Aluminiumlegierungen stranggepresste rohrförmige Profilstücke rechteckigen Querschnitts, die durch Innenstege in Profilkammern unterteilt sind. Die Profillängsachse der rohrförmigen Profilstücke liegt in Einbaulage bei dem in der DE-A- 198 09 112 offenbarten Deformationselement in Fahrzeuglängsrichtung, bei dem aus der DE-A- 195 33 366 bekannten Deformationselement quer zur Fahrzeuglängsrichtung.

Ein wesentlicher Nachteil der vorbekannten Deformationselemente mit rohrförmigen Profilstücken liegt darin, dass oft eine verhältnismässig grobe Faltenbildung beim Stauchvorgang zu einer starken Verminderung des Kompensationsvermögens für die auftreffende Verformungsenergie führt.

Der Erfindung liegt die Aufgabe zugrunde, ein Deformationselement für ein Fahrzeug der eingangs genannten Art zu schaffen, das bei einem guten Aufnahmevermögen für kinetische Energie durch plastische Verformung einfach und kostengünstig herstellbar ist.

Zur erfindungsgemässen Lösung der Aufgabe führt, dass das Deformationselement ein Trägergehäuse mit einer senkrecht zur Fahrzeuglängsrichtung angeordneten stossstangenseitigen Vorderwand, einer in einem Abstand parallel zur Vorderwand angeordneten fahrzeugseitigen Rückwand sowie zwei von einander beabstandeten, die Vorderwand mit der Rückwand verbindenden Gehäusewänden aufweist und im Trägergehäuse wenigstens eine Verbundplatte aus einem beidseitig mit Deckblechen beplankten Wabenkern mit senkrecht zu den Deckblechen stehenden Zellachsen angeordnet ist, wobei die Deckbleche der Vorderwand und der Rückwand anliegen und der Wabenkern durch eine Stauchung in Zellachsenrichtung vorgeschädigt ist.

Bevorzugt ist das Trägergehäuse ein Profilstück mit quer zur Fahrzeuglängsrichtung liegender Profillängsachse.

Zweckmässigerweise ist die Wabenkern-Verbundplatte zwischen der Vorderwand und der Rückwand durch eine Stauchung des Trägergehäuses senkrecht zur Vorder- und Rückwand vorgeschädigt.

Anstelle von einer können auch zwei oder mehr Wabenkern-Verbundplatten im Trägergehäuse hintereinander angeordnet sein. Bei einer bevorzugten Anordnung mit wenigstens zwei Wabenkern-Verbundplatten weisen diese unterschiedliche Kraftniveaus bei Verformung in Zellachsenrichtung auf und sind mit in Richtung von der Stossstange gegen das Fahrzeug zunehmendem Kraftniveau angeordnet.

Üblicherweise ist das Trägergehäuse über rechtwinklig von der Vorderwand abragende Profilstreifen mit der Stossstange verschraubt oder vernietet, jedoch können auch andere Verbindungsarten eingesetzt werden. Zur Verbindung mit dem Fahrzeuglängsträger kann das Trägergehäuse über seitlich von der Rückwand abragende Profilstege mit dem Fahrzeuglängsträger verschweisst oder verschraubt sein.

Bei einer einfachen und kostengünstigen Herstellungsart des Trägergehäuses als Profilstück ist diese aus einem aus einer Aluminiumlegierung stranggepresstem Profil hergestellt.

Bevorzugt sind auch der Wabenkern und die Deckbleche aus einer Aluminiumlegierung gefertigt. Der Wabenkern besteht beispielsweise aus einer AIMn-Legierung und die Deckbleche aus der Legierung AIMg1 (EN AW-5005) oder AIMg3 (EN AW-5754).

Bevorzugt weisen die Deckbleche eine Dicke von 0,5 bis 2 mm auf. Der Wabenkern hat beispielsweise eine Zellgrösse von 5 bis 50 mm und eine Zellwandstärke von 50 µm bis 1 mm. Die Gesamtdicke der Wabenkern-Verbundplatte liegt bevorzugt zwischen etwa 20 und 500 mm.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1 die Draufsicht auf eine Stossstange;
- Fig. 2 einen Querschnitt durch die Stossstange von Fig. 1 nach deren Linie I-I;
- Fig. 3 einen Querschnitt durch ein Trägergehäuse mit eingesetztem Deformationselement in Fahrzeuglängsrichtung;
- Fig. 4 - 6 Kraft-Weg-Diagramme zu Belastungsversuchen an einem Deformationselement;
- Fig. 7 einen Querschnitt durch ein Trägergehäuse mit drei darin eingesetzten Deformationselementen in Fahrzeuglängsrichtung;
- Fig. 8 ein Kraft-Weg-Diagramm der Deformationselemente im Trägergehäuse von Fig. 7;
- Fig. 9 eine Schrägsicht auf eine teilweise geschnittene Wabenkem-Verbundplatte.

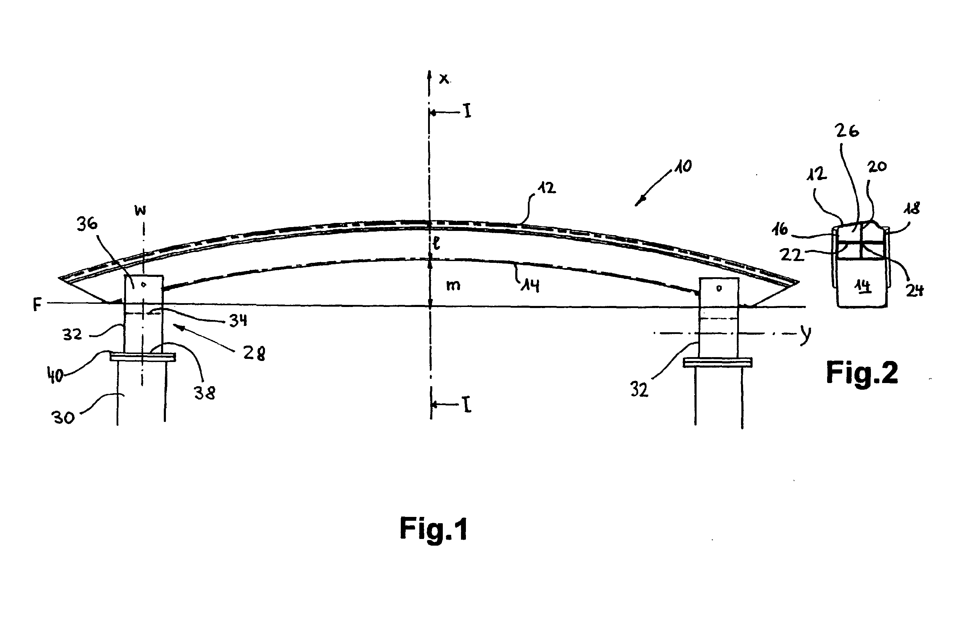

Eine in Fig. 1 dargestellte Stossstange 10 eines aus Gründen der besseren Übersicht nicht wiedergegebenen Personenkraftwagens ist über Deformationselemente 28 an Fahrzeuglängsträgern 30 befestigt. Die Stossstange 10 ist als Aluminiumprofil stranggepresst und gegenüber einer gedachten Frontlinie F des Personenkraftwagens mittig um ein Masse m ausgebaucht.

Die Stossstange 10 weist gemäss Fig. 1 und 2 zwei in einem Abstand 1 zueinander stehende Profilwände 12, 14 auf, die durch Querwände 16, 18 zu einem kastenförmigen Hohlprofil ergänzt sind. In Einbaulage entspricht die vom Fahrzeug weg weisende Profilwand 12 dem einen Stoss aufnehmenden Aussengurt bzw. Druckgurt, die gegen das Fahrzeug gerichtete Profilwand 14 dem Innengurt bzw. Zuggurt.

Mittig zwischen den beiden Querwänden 16, 18 ist ein die Profilwände 12, 14 verbindender Quersteg 20 angeordnet, der unter Bildung einer Knotenlinie 24 von einem die Querwände 16, 18 miteinander verbindenden Vertikalsteg 22 geschnitten wird. Das kastenförmige Hohlprofil der Stossstange 10 wird durch den mittigen Quersteg 20 und dem Vertikalsteg 22 in Kammern 26 unterteilt. Diese Kammern 26 bilden Verformungsteile, die bei Einwirkung einer frontalen Kraft P auf die Stossstange 10 verformt werden und damit einen ersten Teil der Aufprallenergie vernichten.

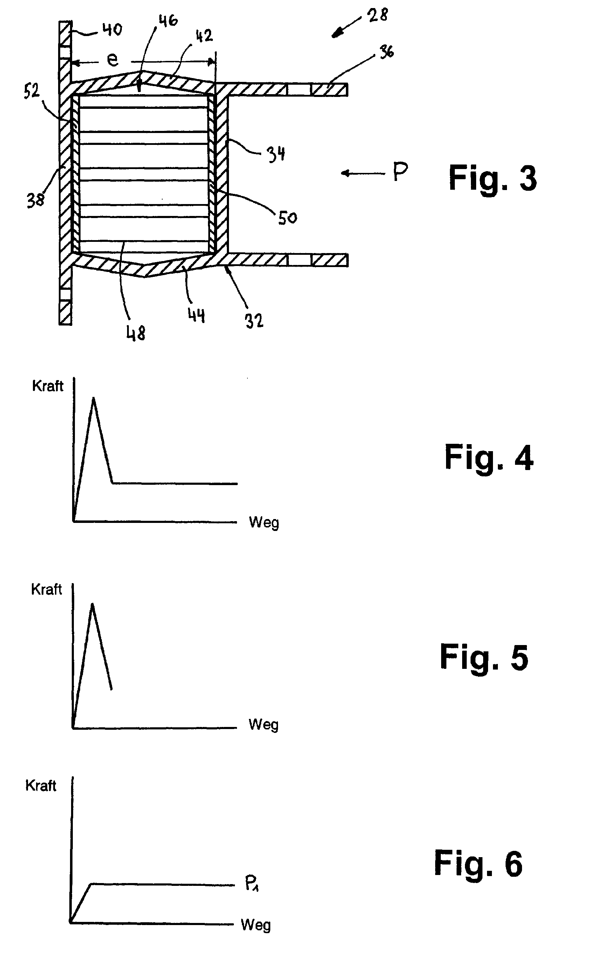

Das in Fig. 1 und 3 gezeigte Deformationselement 28 weist ein Trägergehäuse 32 mit einer senkrecht zu einer Fahrzeuglängsrichtung x angeordneten stossstangenseitigen Vorderwand 34 und einer in einem Abstand e parallel zur Vorderwand 34 angeordneten fahrzeugseitigen Rückwand 38 auf. Vorderwand 34 und Rückwand 38 sind über eine in der Zeichnung obere Gehäusewand 42 und eine untere Gehäusewand 44 miteinander verbunden.

Das Trägergehäuse 32 ist über rechtwinklig von der Vorderwand 34 abragende Profilstreifen 36 mit der Stossstange 10 verschraubt oder vernietet und über seitlich von der Rückwand 38 abragende Profilstege 40 mit einem Fahrzeuglängsträger 30 verschweisst oder verschraubt. Das Trägergehäuse 32 ist ein Profilstück mit 90° zur Fahrzeuglängsrichtung x liegender Profillängsachse x. Im Trägergehäuse ist eine Verbundplatte 46 aus einem beidseitig mit Deckblechen 50, 52 beplankten Wabenkern 48 angeordnet. Die Deckbleche 50,52 liegen der Vorderwand 34 und der Rückwand 38 an.

Der Wabenkern 48 der Verbundplatte 46 ist zur Erzielung eines optimalen Kraftniveaus bei einem Aufprall durch eine Stauchung in Zellachsenrichtung w vorgeschädigt.

Die in den Fig. 4 bis 6 gezeigten Kraft-Weg-Diagramme einer Wabenkern-Verbundplatte 46 bei einer Deformation in Zellachsenrichtung w verdeutlichen die Bedeutung der vorstehend genannten Vorschädigung des Wabenkerns 48.

Fig. 4 zeigt den Verlauf des Kraftniveaus eines nicht vorgeschädigten Wabenkerns 48. Es muss zunächst eine sehr hohe Kraft aufgewendet werden, um die Zellen des Wabenkerns 48 zu schädigen. Nach einer ersten Schädigung der Zellen fällt das Kraftniveau stark ab und zeigt mit zunehmender Deformation einen im wesentlichen konstanten Verlauf. Da bei einem Aufprall möglichst viel kinetische Energie durch plastische Verformung aufgenommen werden muss, ist ein Deformationselement mit einer Kraft-Weg- Charakteristik gemäss Fig. 4 mit Nachteilen behaftet. Durch eine Vorschädigung des Wabenkerns 48 durch Stauchung in Zellachsenrichtung w um einen Betrag, bei dem die zunächst stark ansteigende Kraft wieder auf das konstante Niveau abgefallen ist (Fig. 5), ergibt sich bei erneutem Stauchen der vorgeschädigten Wabenkern-Verbundplatte 46 das in Fig. 6 gezeigte Kraft-Weg-Diagramm mit einem für ein Deformationselement nahezu idealen, über den gesamten Verformungsweg konstanten Verlauf des Kraftniveaus P₁.

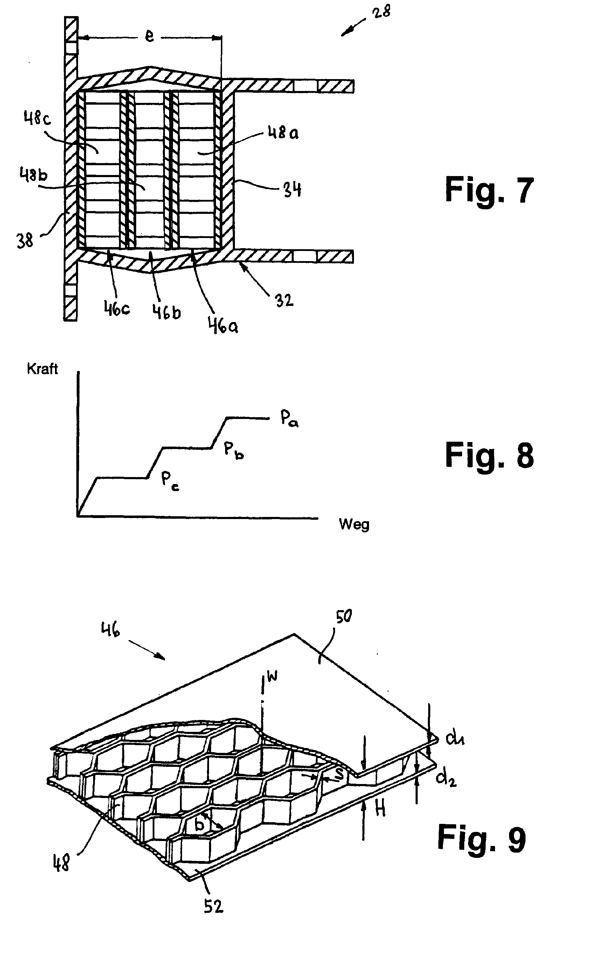

Bei dem in Fig. 7 gezeigten Deformationselement 28 sind im Trägergehäuse 32 drei verschiedene Wabenkern-Verbundplatten 46a, 46b, 46c hintereinander angeordnet. Jede dieser Wabenkern-Verbundplatten ist entsprechend dem Kraft-Weg-Diagramm von Fig. 5 vorgeschädigt. Die drei Wabenkern-Verbundplatten 46a, 46b, 46c weisen unterschiedliche Kraftniveaus Pₐ, P_{b}, P_{c} auf und sind innerhalb des Trägergehäuses 32 in Richtung von der Vorderwand 34 zur Rückwand 38 mit zunehmendem Kraftniveau angeordnet, was bei einem Aufprall in Fahrzeuglängsrichtung x zu dem in Fig. 8 gezeigten Kraft-Weg-Diagramm führt.

Die Vorschädigung von Wabenkernen kann ausserhalb des Trägergehäuses 32 vorgenommen werden. In diesem Fall werden eine oder mehrere Wabenkern-Verbundplatten 46 bereits in vorverformten Zustand in das Trägergehäuse 32 eingebaut, wobei darauf geachtet werden muss, dass in Fahrzeuglängsrichtung x möglichst wenig Spielraum zwischen Vorderwand 34 bzw. Rückwand 38 und den Wabenkern-Verbundplatten 46 vorhanden ist. Ist nur eine Wabenkern-Verbundplatte 46 vorgesehen, so kann die Vorschädigung durch ein entsprechendes Zusammenpressen des Trägergehäuses 32 bei eingesetzter Wabenkern-Verbundplatte 46 erfolgen. Bei dieser Verfahrensweise wird die Wabenkern-Verbundplatte 46 ohne weitere Hilfseinrichtungen zwischen Vorderwand 34 und Rückwand 38 kraftschlüssig gehalten.

Eine weitere Möglichkeit, die Wabenkern-Verbundplatten 46 gegen Herausfallen aus dem Trägergehäuse 32 zu sichern, kann beispielsweise durch teilweises seitliches Umbiegen von Wandteilen des Trägergehäuses 32 erfolgen. Eine andere Massnahme ist das seitliche Anbringen von Befestigungselementen wie z.B. Laschen.

Bei dem in den Fig. 3 und 7 gezeigten Trägergehäuse 32 verlaufen die Gehäusewände 42, 44 von der Vorderwand 34 bzw. der Rückwand 38 gegen die Mitte des Trägergehäuses 32 nach aussen. Damit ist sichergestellt, dass die Wabenkern-Verbundplatten 46 bei einem Aufprall in Fahrzeuglängsrichtung x nicht durch die sich ebenfalls verformenden Gehäusewände 42, 44 beschädigt werden können.

Das Trägergehäuse 32 kann auf kostengünstige Weise durch Strangpressen einer Aluminiumlegierung hergestellt werden.

Eine in Fig. 9 gezeigte und für den Einsatz in einem Trägergehäuse 32 geeignete Wabenkern-Verbundplatte 46 weist beispielsweise einen Wabenkern 48 aus einer AIMn-Legierung und Deckbleche aus einer AIMg1- oder AIMg3-Legierung auf. Die Zellgrösse b des Wabenkerns 48 liegt beispielsweise bei etwa 10 mm bei einer Zellwandstärke s von beispielsweise etwa 0,1 mm. Die Dicke d₁, d₂ der Deckbleche 50, 52 liegt beispielsweise bei etwa 0,8 mm, wobei die Deckbleche gleich oder unterschiedlich dick sein können. Die Gesamtdicke H der Wabenkern-Verbundplatte 46 beträgt beispielsweise etwa 80 mm.

## Patentansprüche

1. Fahrzeug mit an diesem über wenigstens ein Deformationselement (28) quer zu einer Fahrzeuglängsrichtung (x) festgelegter Stossstange (10),
**dadurch gekennzeichnet, dass**
das Deformationselement (28) ein Trägergehäuse (32) mit einer senkrecht zur Fahrzeuglängsrichtung (x) angeordneten stossstangenseitigen Vorderwand (34), einer in einem Abstand (e) parallel zur Vorderwand (34) angeordneten fahrzeugseitigen Rückwand (38) sowie zwei von einander beabstandeten, die Vorderwand (34) mit der Rückwand (38) verbindenden Gehäusewänden (42,44) aufweist und im Trägergehäuse (32) wenigstens eine Verbundplatte (46) aus einem beidseitig mit Deckblechen (50,52) beplankten Wabenkern (48) mit senkrecht zu den Deckblechen (50,52) stehenden Zellachsen (w) angeordnet ist, wobei die Deckbleche (50,52) der Vorderwand (34) und der Rückwand (38) anliegen und der Wabenkern (48) durch eine Stauchung in Zellachsenrichtung (w) vorgeschädigt ist.

2. Fahrzeug nach Anspruch 1, **dadurch gekennzeichnet, dass** das Trägergehäuse (32) ein Profilstück mit quer zur Fahrzeuglängsrichtung (x) liegender Profillängsachse (y) ist.

3. Fahrzeug nach Anspruch 1 oder 2, **dadurch gekennzeichnet, dass** die Wabenkern-Verbundplatte (46) zwischen der Vorderwand (34) und der Rückwand (38) durch eine Stauchung des Trägergehäuses (32) senkrecht zur Vorder- und Rückwand (34,38) vorgeschädigt ist.

4. Fahrzeug nach einem der Ansprüche 1 bis 3, **dadurch gekennzeichnet, dass** wenigstens zwei Wabenkern-Verbundplatten (46a,46b,46c) mit unterschiedlichem Kraftniveau (Pₐ,P_{b},P_{c}) bei Verformung in Zellachsenrichtung (w) im Trägergehäuse (32) hintereinander und mit in Richtung von der Stossstange (10) gegen das Fahrzeug zunehmendem Kraftniveau angeordnet sind.

5. Fahrzeug nach einem der Ansprüche 1 bis 4, **dadurch gekennzeichnet, dass** das Trägergehäuse (32) über rechtwinklig von der Vorderwand (34) abragende Profilstreifen (36) mit der Stossstange (10) verschraubt oder vernietet ist.

6. Fahrzeug nach einem der Ansprüche 1 bis 5, **dadurch gekennzeichnet, dass** das Trägergehäuse (32) über seitlich von der Rückwand (38) abragende Profilstege (40) mit einem Fahrzeuglängsträger (30) verschweisst oder verschraubt ist.

7. Fahrzeug nach einem der Ansprüche 1 bis 6, **dadurch gekennzeichnet, dass** das Trägergehäuse (32) aus einer Aluminiumlegierung durch Strangpressen hergestellt ist.

8. Fahrzeug nach einem der Ansprüche 1 bis 7, **dadurch gekennzeichnet, dass** der Wabenkern (48) und die Deckbleche (50,52) aus einer Aluminiumlegierung gefertigt sind.

9. Fahrzeug nach Anspruch 8, **dadurch gekennzeichnet, dass** der Wabenkern (48) aus einer AIMn-Legierung und die Deckbleche (50,52) aus der Legierung AIMg1 oder AIMg3 gefertigt sind.

10. Fahrzeug nach Anspruch 8 oder 9, **dadurch gekennzeichnet, dass** die Deckbleche (50,52) eine Dicke (d₁,d₂) von 0,5 bis 2 mm aufweisen, der Wabenkern (48) eine Zellgrösse (b) von 5 bis 50 mm und eine Zellwandstärke (s) von 50 µm bis 1 mm aufweist und die Gesamtdicke (H) der Verbundplatte (48) zwischen 20 und 500 mm liegt.
